# EUROPÄISCHE PATENTSCHRIFT

(11) **EP 2 313 296 B1**
(45) Veröffentlichungstag und Bekanntmachung des Hinweises auf die Patenterteilung: **29.05.2013**
(21) Anmeldenummer: 09777132.3
(22) Anmeldetag: 11.07.2009
(51) Int. Cl.: B60T 7/06, G05G 1/487

(54) **BREMSBETÄTIGUNGSVORRICHTUNG EINES FAHRZEUGS**
BRAKE ACTUATING DEVICE OF A VEHICLE
DISPOSITIF D'ACTIONNEMENT DU FREIN D'UN VÉHICULE

(30) Priorität: 14.08.2008 DE 102008037923
(43) Veröffentlichungstag der Anmeldung: 27.04.2011
(73) Patentinhaber: Bayerische Motoren Werke Aktiengesellschaft, 80809 München (DE)
(72) Erfinder: SCHMIDT, Roland, 82131 Stockdorf (DE)
(86) Internationale Anmeldenummer: PCT/EP2009/005053
(87) Internationale Veröffentlichungsnummer: WO 2010/017866

(56) Entgegenhaltungen:
- EP-A- 1 754 641
- DE-A1-102005 036 922
- DE-A1-102006 031 012
- FR-A- 2 268 300

## Beschreibung

Die Erfindung betrifft eine Bremsbetätigungsvorrichtung eines Fahrzeugs nach dem Oberbegriff des Anspruchs 1. Eine derartige Bremsbetätigungsvorrichtung ist in der DE 10 2005 036 922 A1 gezeigt.

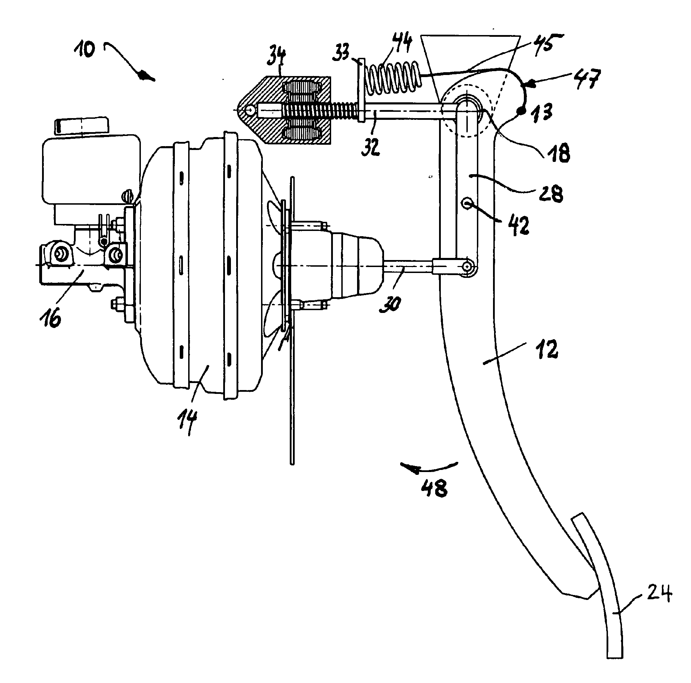

Wie in dieser genannten Schrift, auf deren Inhalt hiermit ausdrücklich Bezug genommen wird, insbesondere dahingehend, dass sämtliche in den Figuren 1 bis 4 der DE 10 2005 036 922 A1 gezeigten Varianten eine Grundlage für die vorliegende Weiterbildung dieser bekannten Bremsbetätigungsvorrichtung(en) sein können, beschrieben ist, ist eine solche Bremsbetätigungsvorrichtung insbesondere für sog. Hybridfahrzeuge vorteilhaft, bei denen mit einer Betätigung des Bremspedalhebels fallsweise ausschließlich oder teilweise ein rekuperatives Abbremsen des Fahrzeugs durch dessen elektrischen Antriebsmotor erfolgen soll, während die vom Bremszylinder beaufschlagten Fahrzeug-Radbremsen überhaupt nicht oder nur eingeschränkt betätigt werden sollen.

In Figur 5 der genannten DE 10 2005 036 922 A1 ist eine Ausführungsform mit einer sog. Pedalkraft-Federkraft-Kompensation gezeigt, d.h. bei dieser Ausführungsform soll jeglicher Eingriff des besagten Aktuators, mit welchem bspw. bei Betätigung des Bremspedalhebels durch den Fahrer jeglicher Druckaufbau im Bremszylinder verhindert werden kann oder mit welchem ein Druckaufbau im Bremszylinder initiiert werden kann, ohne dass der Fahrer den Bremspedalhebel betätigt, für den Fahrer am Bremspedalhebel im wesentlichen nicht spürbar sein. Die Krafteinwirkung des Bremszylinders bzw. von dessen Kolben auf den Bremspedalhebel soll dabei durch die Krafteinwirkung einer geeigneten Kompensations-Federeinrichtung, die ebenfalls auf den Bremspedalhebel einwirkt, im wesentlichen aufgehoben werden.

Grundsätzlich ist eine Bremsbetätigungsvorrichtung mit einer solchen Pedalkraft-Federkraft-Kompensation vorteilhaft, jedoch ist die in der DE 10 2005 036 922 A1 gezeigte Gestaltung (Fig.5) nicht nur relativ aufwändig, sondern es hat sich gezeigt, dass es praktisch kaum möglich ist, die Kompensations-Federeinrichtung solchermaßen auszulegen, dass das gewünschte Ziel erreicht wird. Daher soll vorliegend eine demgegenüber verbesserte Ausführungsform einer solchen Bremsbetätigungsvorrichtung nach dem Oberbegriff des Patentanspruchs 1 aufgezeigt werden soll (= Aufgabe der vorliegenden Erfindung).
Zur Lösung dieser Aufgabe sind die im kennzeichnenden Teil des unabhängigen Patentanspruchs angegebenen Merkmale vorgesehen. Vorteilhafte Aus- und Weiterbildungen sind Inhalt der Unteransprüche.

Es wurde erkannt, dass der hauptsächliche Anwendungsfall für eine Bremsbetätigungsvorrichtung nach dem Oberbegriff des Anspruchs 1 darin besteht, die Weglänge der sog. kraftleitenden Verbindung zwischen dem Bremspedalhebel und dem Kolben des Bremszylinders zu reduzieren. Hiermit kann nämlich an einem Fahrzeug, welches neben dem üblichen auf die Fahrzeug-Räder wirkenden hydraulischen Bremssystem eine weitere sog. Rekuperationsbremse vorzugsweise in Form eines elektrischen Generators aufweist, ein vom Fahrer des Fahrzeugs mit dem Bremspedalhebel vorgegebener Bremswunsch zumindest anteilig in der Rekuperationsbremse umgesetzt werden, indem der vom Bremspedalhebel auf den Bremszylinder bzw. dessen Kolben übertragene Bremswunsch entsprechend reduziert wird. In entsprechender Weise wird dann der besagte Aktuator von einer elektronischen Steuereinheit, die gleichzeitig die Rekuperationsbremse entsprechend ansteuert, angesteuert, und zwar dahingehend, dass mittels des vom Aktuator verlagerbaren Elements die Weglänge der kraftleitenden Verbindung zwischen dem Bremspedalhebel und dem genannten Kolben des Bremszylinders in dem Maße verkürzt wird, als der vom Fahrer mit dem Bremspedalhebel vorgegebene Bremswunsch in der Rekuperationsbremse umgesetzt wird. Dabei soll der Fahrer jedoch weiterhin die gewohnte vollständige Pedalkraft am Bremspedalhebel verspüren, die er auch verspüren würde, wenn sein Bremswunsch vollständig an den Bremszylinder übertragen würde.

Für den im vorhergehenden Absatz genannten Anwendungsfall kann eine erfindungsgemäße Bremsbetätigungsvorrichtung nun erheblich besser passend ausgelegt werden als im genannten Stand der Technik. Anstelle der bekannten Ausführungsform mit zwei Kompensationsfedern ist vorliegend nur ein einziges Federelement vorzugsweise in Form einer Schrauben-Zugfeder vorgesehen, welches direkt zwischen den relevanten Bauelementen, nämlich zwischen einem vom Aktuator bewegten Element, welches die Veränderung in der kraftleitenden Verbindung zwischen dem Bremspedalhebel und dem Bremszylinder-Kolben hervorruft, und dem Bremspedalhebel selbst eingespannt ist. Damit in jeder möglichen Position des um ein sog. Stützlager, welches eine Schwenkachse beschreibt, verschwenkbaren Bremspedalhebels dieses Federelement die vom Kolben des Bremszylinders auf den Bremspedalhebel einwirkende Kraft bestmöglich kompensiert werden kann, ist der wirksame Hebelarm, über den dieses Federelement am Bremspedalhebel bezüglich von dessen Schwenkachse angreift, veränderlich, d.h. dieser besagte Hebelarm soll sich in Verbindung mit einer Verschwenkbewegung des Bremspedalhebels verändern. Damit liegen also zwei Auslegungsparameter vor, anhand derer die gewünschte Kraft-Kompensation in gewünschter Weise dargestellt werden kann, nämlich neben der Federkonstanten bzw. allgemein der Federkennline und somit zusätzlich zum bekannten Stand der Technik der wirksame Hebelarm der Federkraft, welche in Form eines Moments auf den Bremspedalhebel einwirkt.

Ein mit einer Verschwenkbewegung des Bremspedalhebels veränderbarer Hebelarm für die Kraft des Federelements ist einfach durch eine zusammen mit dem Bremspedalhebel verschwenkbare Kurvenbahn realisierbar, auf welcher ein Zugmittel geführt ist, welches das dem genannten beweglichen Element des Aktuators abgewandte Ende des Federelements mit einem Befestigungspunkt am Bremspedalhebel verbindet. Der jeweilige Anlagepunkt des Zugmittels an dieser Kurvenbahn stellt dann den jeweiligen Abstützpunkt dar und bestimmt somit den genannten Hebelarm bezüglich der Schwenkachse des Bremspedalhebels.

Eine in diesem Sinne besonders vorteilhafte, da kompakte Anordnung ergibt sich dabei, wenn die Kurvenbahn im Bereich des besagten Stützlagers des Bremspedalhebels vorgesehen ist, derart, dass bei Betrachtung in Richtung der durch das Stützlager gebildete Schwenkachse des Bremspedalhebels das Zugmittel auf der Kurvenbahn teilweise um diese genannte Schwenkachse unter Abstand von dieser herum geführt ist. Dabei kann die Kurvenbahn auf einem eigenständigen Kulissenelement oder dgl., welches mit dem Bremspedalhebel verbunden ist, vorgesehen sein; in besonders einfacher Gestaltung kann jedoch die Kurvenbahn in den Bremspedalhebel eingearbeitet sein.

Im folgenden wird die Erfindung anhand eines bevorzugten Ausführungsbeispiels weiter erläutert, wobei die beigefügte einzige Figur eine erfindungsgemäße Bremsbetätigungsvorrichtung in Seitenansicht zeigt. Auch hier wird ausdrücklich auf die genannte DE 10 2005 036 922 A1, von der die vorliegende Erfindung ausgeht, Bezug genommen, so dass die grundlegenden Erläuterungen zu dieser Bremsbetätigungsvorrichtung an dieser Stelle nicht wiederholt werden. Insbesondere sind vorliegend für die einzelnen Bauelemente (mit Ausnahme des Begriffs der dort sog. "Kompensationsfeder") auch die gleichen Begriffe und Bezugsziffern wie in der genannten DE 10 2005 036 922 A1 verwendet.

Ein Bremspedalhebel 12 eines Fahrzeugs ist mit seinem hier oberen Ende über ein Stützlager 18 am nicht dargestellten Aufbau des Fahrzeugs angelenkt und dabei um eine senkrecht zur Zeichenebene durch das Stützlager 18 hindurch verlaufende Schwenkachse verschwenkbar. In üblicher Weise ist am freien anderen Ende des Bremspedalhebels 12 eine Pedalplatte 24 angebracht, über welche der Fahrer des Fahrzeugs diesen Bremspedalhebel 12, der hier in einer bereits betätigten Position dargestellt ist, betätigen kann.

Hier in etwa ein Drittel der Länge des Bremspedalhebels 12 vom Stützlager 18 beabstandet ist am Bremspedalhebel 12 an dessen dem Betrachter der Figur zugewandten Seite ein Zapfen 42 angebracht, auf dem ein sog. Wippenhebel 28 um diesen Zapfen 42 verschwenkbar gelagert ist. Das hier untere Ende dieses Wippenhebels 28 ist mit dem freien Ende der Druckstange 30 des Bremskraftverstärkers 14 bzw. des Bremszylinders 16 verbunden, während das gegenüberliegende hier obere Ende dieses Wippenhebels 28, welches hier zwar im Bereich des Stützlagers 18 liegt, jedoch weder mit diesem noch mit dem Bremspedalhebel 12 verbunden ist, mit dem freien Ende einer Spindelstange 32 eines Aktuators 34 verbunden ist.

Bei dieser Spindelstange 32 handelt es sich um das im Patentanspruch 1 (sowie in der Beschreibungseinleitung) genannte verlagerbare Element des Aktuators 34, wobei dieser Aktuator 34 geeignet ist, die Weglänge der durch die Druckstange 30 gebildeten kraftleitenden Verbindung zwischen dem Bremspedalhebel 12 und dem Kolben des Bremszylinders 16 zu verändern, wozu (nochmals) auf die grundlegende Beschreibung in der DE 10 2005 036 922 A1 verwiesen wird. Vorliegend wirkt hierfür der Aktuator 34 über die Spindelstange 32 auf das hier obere Ende des Wippenhebels 28 ein, der im Zapfen 42 verschwenkbar am Bremspedalhebel 12 befestigt ist und dessen anderes Ende mit der Druckstange 30 des Bremszylinders 16 (bzw. des eingangs genannten und in diesem vorgesehenen Kolbens) verbunden ist. Wie aus der Figur klar ersichtlich ist, wird mit einer durch den Aktuator 34 veranlassten Verlagerung der Spindelstange 32 in Horizontalrichtung der Wippenhebel 28 um den Zapfen 42 verschwenkt und somit die Druckstange 30 nach links bzw. nach rechts verschoben, d.h. entweder in den Bremszylinder 16 weiter hinein oder vorrangig - nämlich im Falle des rekuperativen Bremsens - aus diesem heraus verlagert.

Bei still stehendem Aktuator 14 ist der Wippenhebel 28 über die Spindelstange 32 fest abgestützt, so dass der Fahrer über den Bremspedalhebel 12 die Druckstange 30 des Bremszylinders 16 in üblicher Weise verschieben, d.h. in den Bremszylinder 16 hinein verlagern kann. Hierbei verspürt der Fahrer an der Pedalplatte 24 eine gewisse Pedalkraft, die unter anderem aus dem Druck im Bremszylinder 16 - modifiziert durch den Bremskraftverstärker 14 - resultiert. Wird hingegen der Aktuator 34 von einer elektronischen Steuereinheit betätigt, so wird bei nicht vom Fahrer betätigtem Bremspedalhebel 12 ebenfalls die Druckstange 30 in der einen oder in der anderen Richtung - abhängig von der Verschieberichtung der Spindelstange 32 - verschoben. Insbesondere jedoch soll eine Verschiebung der Spindelstange 32 durch den geeignet von einer elektronischen Steuereinheit angesteuerten Aktuator 34 in Verbindung mit einer Betätigung des Bremspedalhebels 12 durch den Fahrer erfolgen, und zwar dahingehend, dass die Verlagerung der Druckstange 30 durch den Aktuator 34 einer Verlagerung der Druckstange 30 durch den vom Fahrer gemäß Pfeilrichtung 48 betätigten Bremspedalhebel 12 entgegengesetzt ist.

Beispielsweise kann eine Betätigung des Aktuators 34 gleichzeitig mit einer Betätigung des Bremspedalhebels 12 derart erfolgen, dass eine aus der Bewegung des Bremspedalhebels 12 resultierende Verlagerung der Druckstange 30 aufgehoben bzw. kompensiert wird, so dass sich letztlich die Druckstange 30 überhaupt nicht bewegt. Beispielsweise kann eine Betätigung des Aktuators 34 - geeignet angesteuert durch eine elektronische Steuereinheit - auch solchermaßen erfolgen, dass die Betätigung des Bremspedalhebels 12 durch den Fahrer nur anteilig in eine Verschiebung der Druckstange 30 des Bremszylinders 16 umgesetzt wird, während der andere Teil des entsprechenden vom Fahrer mit dem Bremspedalhebel 12 vorgegebenen Bremswunsches angesteuert durch die besagte elektronische Steuereinheit in einem rekuperativen Bremsvorgang insbesondere durch den dann als Generator betriebenen elektrischen Antriebsmotor des Fahrzeugs (insbesondere Hybrid-Fahrzeugs) umgesetzt wird.

In sämtlichen genannten Fällen, nämlich bei vollständiger oder teilweiser Umsetzung des vom Fahrer mit dem Bremspedalhebel 12 vorgegebenen Bremswunsches über den Bremszylinder 16, aber auch dann, wenn dem Bremszylinder 16 überhaupt kein Bremswunsch übermittelt wird, sondern dieser gesteuert durch eine bzw. die bereits genannte elektronische Steuereinheit vollständig in einem rekuperativen Bremsvorgang umgesetzt wird, soll der Fahrer am Bremspedalhebel 12 bzw. an dessen Pedalplatte 24 die gleiche, gewohnte Pedalkraft verspüren.

Zur Erzeugung dieser genannten Pedalkraft ist ein Federelement 44 vorgesehen, welches mit einem Ende direkt oder indirekt an der Spindelstange 32 (= "verlagerbares Element") befestigt und mit dem anderen Ende unter Zwischenschaltung eines Zugmittels 45, welches über eine am Bremspedalhebel 12 vorgesehene Kurvenbahn 47 geführt ist, letztlich in einem Befestigungspunkt 13 am Bremspedalhebel 12 befestigt ist. Vorliegend ist diese Kurvenbahn 47 in den Endabschnitt des Bremspedalhebels 12, dabei dessen Stützlager 18 umgebend, eingearbeitet.

Es sind die gemeinsam mit dem Bremspedalhebel 12 verschwenkbare (da vorliegend in diesen eingearbeitete) Kurvenbahn 47 sowie das Federelement 44 solchermaßen ausgelegt, dass eine durch den Aktuator 34 bewirkte Verlagerung der Spindelstange 32 zur Verkürzung der Weglänge der kraftleitenden Verbindung (über die Druckstange 30) zwischen dem Bremspedalhebel 12 und dem weiter oben genannten Kolben des Bremszylinders 16 im wesentlichen in jeder möglichen Position des Bremspedalhebels 12 keine für den Fahrer spürbare Veränderung der Pedalkraft am Bremspedalhebel 12 hervorruft.

Durch die praktisch frei gestaltbare Kurvenbahn 47 kann jedenfalls für einen relativ großen Verstellweg des Aktuators 34 die vom Federelement 44 in den Bremspedalhebel 12 eingeleitete Kompensationskraft ideal einer gewünschten Pedalkraft-Kennlinie (= Kraft über Weg des Bremspedalhebels 12) angepasst werden. Mögliche Abweichungen von diesem definierten Zusammenhang könnten bei einer linearen Kennlinie des Federelements 44 zu geringfügigen Abweichungen der Kompensationskraft von der gewünschten Pedalkraft-Kennlinie führen, jedoch ist dies beispielsweise durch Verwendung eines Federelements mit progressiver Kennlinie kompensierbar. Wesentlich ist, dass für die konkrete Auslegung einer erfindungsgemäßen Bremsbetätigungsvorrichtung nun zwei Einflussparameter zur Verfügung stehen, nämlich neben der Federkennlinie des Federelements 44 selbst zusätzlich die Gestaltung der Kurvenbahn 47.

Für letztere kann im übrigen auch eine separate Kurvenbahn-Scheibe oder Kulissenscheibe vorgesehen sein, die vorzugsweise bezüglich des Stützlagers 18 drehfest mit dem Bremspedalhebel 12 verbunden sein sollte. Was das Zugmittel 45 betrifft, so kann es sich hierbei um ein Stahlband oder ein geeignetes anderes flexibles Zugmittel wie bspw. eine Kette oder Seil handeln. Vorliegend ist dieses Zugmittel 45 auf der Kurvenbahn 47 in einem sich annähernd über 90 Winkelgrade erstreckenden Bogen beabstandet vom vom Stützlager 18 teilweise um die durch dieses Stützlager 18 führende Schwenkachse des Bremspedalhebels 12 bis zum Befestigungspunkt 13 am Bremspedalhebel 12 herumgeführt. Mit seinem an deren Ende ist das Zugmittel 45 fest mit dem hier rechtsseitigen Ende des als Schrauben-Zugfeder ausgebildeten Federelements 44 verbunden, welches mit seinem anderen hier linksseitigen Ende vorliegend über einen an der Spindelstange 32 vorgesehen Ansatz 33 und somit indirekt an der Spindelstange 32 befestigt ist.

Der Vollständigkeit halber sei noch darauf hingewiesen, dass zusätzlich zur hier vorgestellten Anordnung von Federelement 44 und Kurvenbahn 47 eine vergleichbare zusätzliche Anordnung eines weiteren Federelements mit einer weiteren Kurvenbahn spiegelsymmetrisch bezüglich einer hier vertikal durch das Stützlager 18 verlaufenden Symmetrieachse vorgesehen und am Bremspedalhebel 12 sowie an der (hierfür entsprechend verlängerten) Spindelstange 32 befestigt sein kann. Mit dieser weiteren Anordnung kann dann durch den Aktuator 34 auch gezielt eine Bremskraft im Bremszylinder 16 aufgebaut werden, ohne dass der Fahrer den Bremspedalhebel 12 entsprechend weiter betätigt und ohne dass der Fahrer hierdurch eine spürbare Veränderung der Pedalkraft am Bremspedalhebel 12 feststellen kann. Mit der figürlich dargestellten Anordnung hingegen kann lediglich eine Reduzierung des vom Fahrer mit seinem Bremspedalhebel 12 aufgebrachten an den Bremszylinder 16 übermittelten Bremswunsches erfolgen, ohne dass der Fahrer hierdurch ein spürbare Veränderung der Pedalkraft am Bremspedalhebel 12 feststellen kann. Schließlich sei noch darauf hingewiesen, dass durchaus eine Vielzahl von Details abweichend von obigen Erläuterungen gestaltet sein kann, ohne den Inhalt der Patentansprüche zu verlassen.

## Patentansprüche

1. Bremsbetätigungsvorrichtung (10) eines Fahrzeugs, mit einem vom Fahrer zu betätigenden, an einem Stützlager (18) schwenkbar befestigten Bremspedalhebel (12), der mit einem Bremszylinder (16) kraftleitend verbunden ist, um über den Bremspedalhebel (12) einen im Bremszylinder (16) angeordneten Kolben zu betätigen, wobei zwischen dem Kolben und dem Bremspedalhebel (12) funktional ein Aktuator (34) geschaltet ist, der über ein verlagerbares Element (32) die Weglänge der kraftleitenden Verbindung zwischen dem Bremspedalhebel (12) und dem Kolben des Bremszylinders (16) zu verändern in der Lage ist, und wobei weiterhin ein Federelement (44) vorgesehen ist, dessen auf den Bremspedalhebel (12) einwirkende Federkraft sich beim Verändern der Weglänge der kraftleitenden Verbindung zwischen dem Bremspedalhebel (12) und dem Kolben des Bremszylinders (16) mittels des Aktuators (34) solchermaßen ändert, dass die Summe aus genannter Federkraft und der vom Bremszylinder (16) auf den Bremspedalhebel (12) einwirkenden Kraft im wesentlichen unverändert bleibt, wozu dieses Federelement (44) mit einem Ende direkt oder indirekt am verlagerbaren Element (32) befestigt ist,
**dadurch gekennzeichnet, dass** das andere Ende des Federelements (44) unter Zwischenschaltung eines Zugmittels (45) letztlich am Bremspedalhebel (12) befestigt ist, wobei dieses Zugmittel (45) über eine am Bremspedalhebel (12) vorgesehene Kurvenbahn (47) in einem Bogen beabstandet vom Stützlager (18) teilweise um die durch dieses Stützlager (18) führende Schwenkachse des Brempedalhebes (12) herum geführt ist, wobei die gemeinsam mit dem Bremspedalhebel (12) verschwenkbare Kurvenbahn (47) sowie das Federelement (44) solchermaßen ausgelegt sind, dass eine durch den Aktuator (34) bewirkte Verlagerung des verlagerbaren Elements (32) zur Verkürzung der Weglänge der kraftleitenden Verbindung zwischen dem Bremspedalhebel (12) und dem Kolben des Bremszylinders (16) im wesentlichen in jeder möglichen Position des Bremspedalhebels (12) keine für den Fahrer spürbare Veränderung der Pedalkraft am Bremspedalhebel (12) hervorruft, wobei sich durch die besagte Kurvenbahn (47) der wirksame Hebelarm, über den das Federelement (44) am Bremspedalhebel (12) bezüglich von dessen Schwenkachse angreift, mit einer Verschwenkbewegung des Bremspedalhebels (12) verändert.

2. Bremsbetätigungsvorrichtung nach Anspruch 1,
**dadurch gekennzeichnet, dass** die Kurvenbahn (47) im Bereich des Stützlagers (18) des Bremspedalhebels (12) vorgesehen ist, über welches dieser schwenkbar am Aufbau oder Chassis (20) des Fahrzeugs gelagert ist.

3. Bremsbetätigungsvorrichtung nach Anspruch 1 oder 2,
**dadurch gekennzeichnet, dass** die Kurvenbahn in den Bremspedalhebel (12) eingearbeitet ist.

4. Bremsbetätigungsvorrichtung nach einem der vorangegangenen Ansprüche,
**dadurch gekennzeichnet, dass** der Aktuator (34) über eine Spindelstange (32) als genanntem verlagerbarem Element (32) auf ein Ende eines sog. Wippenhebel (28) einwirkt, der verschwenkbar am Bremspedalhebel (12) befestigt ist und dessen anderes Ende mit der Druckstange (30) des Bremszylinders (16) verbunden ist.

## Claims

1. A brake actuating device (10) for a vehicle, with a brake pedal lever (12) to be actuated by the driver, which is pivotably fastened to a support bearing (18) and is connected in a force-transmitting manner to a brake cylinder (16) in order to actuate, by means of the brake pedal lever (12), a piston arranged in the brake cylinder (16), wherein functionally connected between the piston and the brake pedal lever (12) is an actuator (34), which is in a position to change, by means of a displaceable element (32), the path length of the force-transmitting connection between the brake pedal lever (12) and the piston of the brake cylinder (16), and wherein a spring element (44) is furthermore provided, the spring force of which acting on the brake pedal lever (12) changes when the path length of the force-transmitting connection between the brake pedal lever (12) and the piston of the brake cylinder (16) is changed by means of the actuator (34) in such a way that the sum of said spring force and the force acting from the brake cylinder (16) on the brake pedal lever (12) substantially remains unchanged, for which purpose this spring element (44) is fastened by one end directly or indirectly to the displaceable element (32), **characterised in that** the other end of the spring element (44) is ultimately fastened to the brake pedal (12) with the interposition of a traction means (45), this traction means (45) being guided by way of a cam track (47) provided on the brake pedal lever (12) in a curve at a spacing from the support bearing (18) partially about the pivot axis of the brake pedal lever (12) leading through this support bearing (18), the cam track (47), which can be pivoted together with the brake pedal lever (12), as well as the spring element (44) being designed in such a way that a displacement of the displaceable element (32) brought about by the actuator (34) to shorten the path length of the force-transmitting connection between the brake pedal lever (12) and the piston of the brake cylinder (16) substantially in every possible position of the brake pedal lever (12) does not cause any change in the pedal force on the brake pedal lever (12) that is noticeable to the driver, wherein, owing to said cam track (47), the effective lever arm, by means of which the spring element (44) engages on the brake pedal lever (12) in relation to its pivot axis, changes with a pivoting movement of the brake pedal lever (12).

2. A brake actuating device according to claim 1, **characterised in that** the cam track (47) is provided in the region of the support bearing (18) of the brake pedal lever (12), by means of which support bearing the latter is pivotably mounted on the body or chassis (20) of the vehicle.

3. A brake actuating device according to claim 1 or 2, **characterised in that** the cam track is incorporated in the brake pedal lever (12).

4. A brake actuating device according to any one of the preceding claims, **characterised in that** the actuator (34) acts by means of a spindle rod (32) as said displaceable element (32) on one end of a so-called rocker lever (28), which is pivotably fastened on the brake pedal lever (12) and the other end of which is connected to the pressure rod (30) of the brake cylinder (16).

## Revendications

1. Dispositif d'actionnement de frein (10) pour un véhicule comportant un levier de pédale de frein (12) actionné par le conducteur et monté de manière pivotante sur un palier d'appui (18), le levier coopérant dans le sens de la transmission d'une force avec un maître-cylindre (16) pour actionner le piston du maître-cylindre (16) par l'intermédiaire du levier de pédale de frein (12),
- un actionneur (34) étant monté fonctionnellement entre le piston et le levier de pédale de frein (12), cet actionneur permettant de modifier par un élément déplaçable (32) la longueur de la course de la liaison de transmission de force entre le levier de pédale de frein (12) et le piston du maître-cylindre (16), et
- un élément de ressort (44) dont la force agissant sur le levier de pédale de frein (12) varie lorsqu'on modifie la longueur de la course de la liaison de transmission de force entre le levier de pédale de frein (12) et le piston du maître-cylindre (16) avec l'actionneur (34) de façon que la somme de la force de ressort et de la force exercée par le maître-cylindre (16) sur le levier de pédale de frein (12) reste pratiquement inchangée, cet élément de ressort (44) étant fixé par une extrémité, directement ou indirectement à l'élément déplaçable (32),
dispositif **caractérisé en ce que**
- l'autre extrémité de l'élément de ressort (44) est fixée au levier de pédale de frein (12) avec interposition d'un moyen de traction (45),
- ce moyen de traction (45) passant sur un chemin de came (47) prévu sur le levier de pédale de frein (12), suivant une courbe distante du palier d'appui (18) en passant en partie autour de l'axe de pivotement du levier de pédale de frein (12), cet axe traversant le palier d'appui (18),
- le chemin de came (47) pivotant en commun avec le levier de pédale de frein (12) ainsi que l'élément de ressort (44) étant conçus pour qu'un déplacement de l'élément déplaçable (32) produit par l'actionneur (34) pour raccourcir la longueur de la course de la liaison de transmission de force entre le levier de pédale de frein (12) et le piston du maître-cylindre (16) dans toute position possible du levier de pédale de frein (12) ne produit pratiquement pas de modification de la force de la pédale exercée sur le levier de pédale de frein (12) et perçue par le conducteur,
- le bras de levier efficace du chemin de came (47) par lequel l'élément de ressort (44) agit sur le levier de pédale de frein (12) par rapport à son axe de pivotement varie selon le mouvement de pivotement du levier de pédale de frein (12).

2. Dispositif d'actionnement de frein selon la revendication 1,
**caractérisé en ce que**
le chemin de came (47) est prévu dans la région du palier d'appui (18) du levier de pédale de frein (12), palier par lequel le levier est monté pivotant à la carrosserie ou au châssis (20) du véhicule.

3. Dispositif d'actionnement de frein selon la revendication 1 ou 2,
**caractérisé en ce que**
le chemin de came est usiné dans le levier de pédale de frein (12).

4. Dispositif d'actionnement de frein selon l'une des revendications précédentes,
**caractérisé en ce que**
l'actionneur (34) agit par une tige filetée (32) constituant l'élément déplaçable (32) sur une extrémité d'un levier basculant (28) fixée de manière pivotante au levier de pédale de frein (12) et dont l'autre extrémité est reliée à la tige de poussée (30) du maître-cylindre (16).
